## Europäisches Patentamt

## European Patent Office

## Office européen des brevets

(19)

(11) Veröffentlichungsnummer: **0 030 589**
**B1**

(12) **EUROPÄISCHE PATENTSCHRIFT**

(45) Veröffentlichungstag der Patentschrift:
23.03.83

(21) Anmeldenummer: **80105939.5**

(22) Anmeldetag: **01.10.80**

(51) Int. Cl.³: **C 08 G 69/44**, C 09 J 3/16

(54) Verwendung von Copolyetheresteramiden als Schmelzkleber zum Heissiegeln von Textilien.

(30) Priorität: **06.12.79 DE 2949064**

(43) Veröffentlichungstag der Anmeldung:
**24.06.81 Patentblatt 81/25**

(45) Bekanntmachung des Hinweises auf die Patenterteilung:
**23.03.83 Patentblatt 83/12**

(84) Benannte Vertragsstaaten:
**CH FR GB IT LI NL**

(56) Entgegenhaltungen:
**DE-A-2 712 987**
**DE-A-2 716 004**
**CHEMICAL ABSTRACTS, Band 84, 1976,**
**Seite 48, Nr. 181313g**
**Columbus, Ohio, U.S.A.**

(73) Patentinhaber: **CHEMISCHE WERKE HÜLS AG,**
**Postfach 1320, D-4370 Marl 1 (DE)**

(72) Erfinder: **Mumcu, Salih, Dr., Bitterfelder Strasse 9 a,**
**D-4370 Marl (DE)**
Erfinder: **Feldmann, Rainer, Dr., Leverkusener**
**Strasse 27, D-4370 Marl (DE)**

BUNDESDRUCKEREI BERLIN

## Verwendung von Copolyetheresteramiden als Schmelzkleber zum Heißsiegeln von Textilien

Es ist bekannt, Copolyamide als Schmelzkleber zum Heißsiegeln von Textilien einzusetzen. Insbesondere solche, die den Baustein Laurinlactam enthalten. Diese Schmelzkleber besitzen eine gute Beständigkeit bei der chemischen Reinigung in Lösemitteln, befriedigen jedoch noch nicht voll beim Heißsiegeln von siliconisierten Geweben. Außerdem fehlt ihnen der sogenannte »weiche Griff«.

Copolyester, insbesondere Polyetherester, besitzen zwar einen weicheren Griff, sind jedoch weniger beständig bei der chemischen Reinigung.

Aus der japanischen Patentanmeldung 7 619 034 (Chem. Abstracts Vol. 84 (1976) 181 313 g) sind Block-Copolyetheresteramide bekannt, welche aus Polyamid, 6-Dicarbonsäure, Polytetrahydrofuran-Diol und dem Umesterungsprodukt aus Butandiol-(1,4) und Dimethylterephthalat und Dimethylisophthalat erhalten wurden. Derartige Copolyetheresteramide besitzen einen zu hohen Schmelzpunkt und eine geringe Reinigungsbeständigkeit. Die Verklebung zeigt eine zu hohe Durchschlagsneigung. Außerdem besitzen derartige Produkte einen zu hohen Extraktgehalt.

Aufgabe der Erfindung ist die Verwendung solcher Copolyetheresteramide als Schmelzkleber zum Heißsiegeln von Textilien, welche gut beständig sind beim Waschen und bei der chemischen Reinigung in Lösemitteln, bei niedrigen Temperaturen verklebt werden können, bei Anwendung, insbesondere des Pulverpunktverfahrens, die Verklebungspunkte weniger stark durchscheinen lassen (sogenannter Durchschlageffekt) und einen weichen Griff ergeben.

Insbesondere sollen die Copolyetheresteramide zum Beschichten und Verkleben von siliconisiertem Gewebe geeignet sein. Bei derartigen Geweben besitzen die Schmelzkleber des Standes der Technik weder eine ausreichende Haftfestigkeit noch eine hinreichende Wasch- und Reinigungsbeständigkeit bei der Reinigung in chemischen Lösemitteln.

Die Lösung der Aufgabe gelingt, wenn Copolyetheresteramide verwendet werden, in welchen die polyamidbildenden Verbindungen zu 30 bis 75 Gewichtsprozent aus Laurinlactam bestehen und die restlichen Verbindungen zusammen mit dem Laurinlactam Copolyamide ergeben, deren Schmelzpunkt im Bereich von 90 bis 150°C liegt, als Dicarbonsäuren ausschließlich aliphatische Dicarbonsäuren eingesetzt werden und die polyamidbildenden Verbindungen A und die polyetheresterbildenden Verbindungen B im Gewichtsverhältnis 93 : 7 bis 35 : 65 eingesetzt werden.

Vorteilhaft beträgt das Gewichtsverhältnis der Komponenten A und B 90 : 10 bis 50 : 50, insbesondere 85 : 15 bis 55 : 45.

Die polyamidbildenden Verbindungen bestehen mindestens aus zwei Komponenten, wobei die eine Komponente Laurinlactam darstellt. Der Anteil an Laurinlactam liegt im Bereich von 30 bis 75 Gewichtsprozent, bezogen auf die polyamidbildenden Verbindungen. Insbesondere läßt sich der Anteil an Laurinlactam dadurch bestimmen, daß Copolyamide aus den copolyamidbildenden Verbindungen einen Schmelzpunkt im Bereich von 90 bis 150°C, bevorzugt 95 bis 145°C, besitzen. Der Schmelzpunkt wird dabei bestimmt in einem Gerät Mettler FP 51. Vorteilhaft werden drei oder mehr copolyamidbildende Verbindungen eingesetzt. Neben Laurinlactam bzw. $\omega$-Aminododecansäure oder einem Gemisch aus beiden können demnach verwendet werden Lactame mit mindestens 6 Kohlenstoffatomen, wie Caprolactam und Capryllactam, Aminocarbonsäuren, wie $\omega$-Aminoundecansäure, sowie äquivalente Mengen aus aliphatischen Dicarbonsäuren, wie Adipinsäuren, Azelainsäure, Sebazinsäure, Dodecandisäure, und Diaminen, wie Hexamethylendiamin, Dodecamethylendiamin, Isophorondiamin, Trimethylhexamethylendiamin, 4,7-Dioxadecandiamin-(1,10), 4,9-Dioxadodecandiamin-(1,12). Diese Komponenten werden insbesondere in Form ihrer Salze eingesetzt. Als aliphatische Dicarbonsäuren können auch verzweigtkettige Dicarbonsäuren, wie Trimethyladipinsäure verwendet werden.

Man erhält Produkte mit einem niedrigen Lactamgehalt, so daß eine Extraktion nicht erforderlich wird.

Beispielsweise können folgende polyamidbildende Verbindungen eingesetzt werden:

Laurinlactam und Caprolactam im Gewichtsverhältnis 75 : 25
Laurinlactam und Caprolactam im Gewichtsverhältnis 55 : 45
Laurinlactam, Caprolactam und AH-Salz im Gewichtsverhältnis 60 : 25 : 15
Laurinlactam, Caprolactam und DH-Salz im Gewichtsverhältnis 50 : 25 : 25
Laurinlactam, Caprolactam und Salz aus Dodecandisäure und Isophorondiamin im Gewichtsverhältnis 60 : 20 : 20
Laurinlactam, AH-Salz und DH-Salz im Gewichtsverhältnis 50 : 30 : 20
Laurinlactam, Caprolactam, AH-Salz und DH-Salz im Gewichtsverhältnis 40 : 30 : 15 : 15
Laurinlactam, Caprolactam, Aminoundecansäure, Salz aus Hexamethylendiamin und Azelainsäure im Gewichtsverhältnis 40 : 25 : 20 : 15

Als polyetheresterbildende Komponenten werden eingesetzt:

$B_1$) aliphatische lineare oder verzweigte Dicarbonsäuren mit 6 bis 13 Kohlenstoffatomen.

Beispielsweise seien genannt: Adipinsäure, Trimethyladipinsäure, Pimelinsäure, Korksäure, Azelainsäure, Sebacinsäure, Dodecandisäure. Bevorzugt werden Adipinsäure, Azelainsäure, Sebacinsäure und Dodecandisäure.

B₂) Polyalkylenoxid-Diole, die abgeleitet werden von Ethylenoxid, Propylenoxid und Tetrahydrofuran. Die Polyalkylenoxide können Homo- und/oder Copolymere sein. Auch Gemische von Homo- und/oder Copolymeren können eingesetzt werden. Ihre zahlenmittleren Molmassen bewegen sich zwischen 250 und 3000, vorzugsweise zwischen 300 und 2200, insbesondere zwischen 500 und 1200. Sie enthalten OH-Endgruppen. Bevorzugt wird (Polytetrahydrofuran)diol eingesetzt. Die Komponenten B₁ und B₂ kommen im Molverhältnis 1 : 0,95 bis 1 : 1,05, bevorzugt äquimolar zum Einsatz.

Die erfindungsgemäß zu verwendenden Copolyetheresteramide haben Schmelzpunkte von 85 bis 140°C.

Die Herstellung der Copolyetheresteramide erfolgt zweckmäßig in einem Rührautoklav nach bekannten Polykondensationsverfahren, z. B. nach dem Verfahren der hydrolytischen Lactampolymerisation gemäß DE-AS 2 152 194. Vorteilhaft ist es, zunächst Lactame, ω-Aminocarbonsäuren und Dicarbonsäuren, gegebenenfalls in Gegenwart eines Katalysators, bei 250 bis 290°C innerhalb von 1/2 bis 8 Stunden zu polymerisieren bzw. unter einem Wasserdampfdruck von 10 bis 20 bar anzukondensieren und nach dem Entspannen des Reaktors Polyalkylenoxid-Diol und ggf. Diamin hinzuzugeben und entweder bei Normaldruck oder im Vakuum bei Drücken zwischen 100 mbar und 5 mbar bis zum gewünschten Polykondensationsgrad zu polykondensieren. Besonders vorteilhaft ist es, vor der Polykondensation unter einem Wasserdampfdruck von 5 bis 20 bar innerhalb von 15 Minuten bis 4 Stunden das Reaktionsgemisch zu homogenisieren.

Neben diesem diskontinuierlichen Verfahren können auch kontinuierliche Herstellverfahren zur Anwendung kommen.

Die gewünschten relativen Lösungsviskositäten $\eta_{rel}$ (gemessen nach DIN 53 727 in m-Kresol) liegen zwischen 1,3 und 1,75, bevorzugt zwischen 1,35 und 1,70.

Als Katalysatoren eignen sich Phosphorsäure, Aminsalze der Phosphorsäure, Zinkacetat und Calciumacetat in Mengen von 0,01 bis 0,3 Gewichtsprozent, bezogen auf die gesamte Masse. Bevorzugt wird Phosphorsäure in Mengen von 0,02 bis 0,1 Gewichtsprozent eingesetzt. Die Katalysatorzugabe kann vor und während der Polykondensationsphase erfolgen.

Die Schmelzkleber werden in Form von Pulvern eingesetzt. Die Herstellung des Pulvers erfolgt vorteilhaft durch Kaltmahlen und anschließendes Klassieren. Falls gewünscht, können die Pulver auch nach der sogenannten Fällungsmethode hergestellt werden.

Die Korngrößenverteilung der Pulver liegt beim Pastenpunktverfahren <80 μm, beim Pulverpunktverfahren bei 60 bis 200 μm sowie beim Pulverstreuverfahren bei 200 bis 500 μm.

Dem Pulver können übliche Zusatzstoffe, falls gewünscht, zugesetzt werden, wie z. B. Metallseifen, wie Ca-stearat, Zn-stearat, optische Aufheller oder gegebenenfalls Stabilisierungsmittel, wie sterisch gehinderte Phenole.

Die in der nachfolgenden Tabelle aufgeführten Pulver mit einer Korngrößenverteilung von 60 bis 200 μm wurden auf einen handelsüblichen Einlagestoff mittels einer Pulverpunktmaschine mit einem 11 mash Raster (d. h. mit 11 Öffnungen pro inch (2,54 cm) mit einem Auflagegewicht von 18±2 g/m² aufgebracht. Auf einer Bügelpresse wurde bei 160°C mit einem Preßdruck von 350 p/cm² (3,4 · 10⁴ Pa) mit einem handelsüblichen siliconisierten Oberstoff verklebt. Die verklebten Teile wurden dreimal bei 60°C mit einem handelsüblichen Feinwaschmittel gewaschen und fünfmal mit einem üblichen chemischen Reinigungsmittel gereinigt. Die Trennfestigkeit wurde nach DIN 54 310 bestimmt, wobei die Werte in N/5 cm angegeben sind.

Die Vergleichsbeispiele zeigen, daß bei einem zu niedrigen Poly(tetrahydrofuran)-Anteil der Griff hart und die Verklebungspunkte durchscheinend werden (Vergleichsbeispiel 1), bei einem Laurinlactam-Gehalt von <30 Gewichtsprozent (bezogen auf die polyamidbildenden Verbindungen) und bei einem Anteil an Polyalkylenoxid-Diol >65 Gewichtsprozent (bezogen auf die Gesamtmasse) die Trennfestigkeit nach der chemischen Reinigung abnimmt (Vergleichsbeispiele 2 und 3).

Vergleichsbeispiel 4 stellt den Stand der Technik dar, wie er durch die japanische Patentanmeldung 7 619 034 dargestellt wird.

Tabelle 1

| Art und Zusammensetzung (Gew.-%) der Copolyetheresteramide | Anteil (Gew.-%) LL in Poly-amid | Polyamid-anteil A (Gew.-%) | Polyether-ester-anteil B (Gew.-%) | $\eta_{rel}$ | Fp (°C) | Trennfestigkeit | | | Griff | Durch-schein-barkeit |
|---|---|---|---|---|---|---|---|---|---|---|
| | | | | | | unbeh. | nach Wäsche | nach Reini-gung | | |
| **Beispiel** | | | | | | | | | | |
| 1  LL/CL//DDS/PTHF 1000  45 20 6,5 28,5 | 69,2 | 65,0 | 35,0 | 1,65 | 133 | 12 | 11 | 8 | sehr weich | nein |
| 2  38 27 6,5 28,5 | 58,5 | 65,0 | 35,0 | 1,50 | 131 | 11 | 10 | 8 | sehr weich | nein |
| 3  53 22 4,5 20,5 | 70,7 | 75,0 | 25,0 | 1,60 | 140 | 13 | 10 | 7 | sehr weich | nein |
| 4  LL/CL/AH-Salz//AS/PTHF 1000  36 15 9    5 35 | 60,0 | 60,0 | 40,0 | 1,60 | 114 | 13 | 11 | 6 | sehr weich | nein |
| 5  36 20 24    2,5 17,5 | 45,0 | 80,0 | 20,0 | | 126 | 12 | 10 | 8 | sehr weich | nein |
| 6  LL/CL/DH-Salz//DDS/PTHF 1000  39 17 24    3,6 16,4 | 48,8 | 80,0 | 20,0 | 1,48 | 122 | 13 | 11 | 8 | sehr weich | nein |
| 7  LL/CL/AzS-HMD//AzS/PTHF 1000  36 20 24    3 17 | 45,0 | 80,0 | 20,0 | 1,62 | 121 | 12 | 10 | 7 | sehr weich | nein |
| 8  LL/CL/AH-Salz/DH-Salz//AzS/PTHF 650  34 25 13    13    3,3 11,7 | 40,0 | 85,0 | 15,0 | 1,48 | 89 | 12 | 9 | 7 | sehr weich | nein |
| 9  LL/CL//DDS/Polyethylenglykol 1000  45 20 6,5 28,5 | 69,2 | 65,0 | 35,0 | 1,57 | 129 | 13 | 5 | 7 | weich | nein |
| 10  LL/CL//DDS/PTHF 650  32 18 12,6 37,4 | 64,0 | 50,0 | 50,0 | 1,55 | 120 | 12 | 9 | 6 | sehr weich | nein |

Fortsetzung

| | Art und Zusammensetzung (Gew.-%) der Copolyetheresteramide | Anteil (Gew.-%) LL in Poly-amid | Polyamid-anteil A (Gew.-%) | Polyether-ester-anteil B (Gew.-%) | $\eta_{rel}$ | Fp (°C) | Trennfestigkeit | | | Griff | Durch-schein-barkeit |
|---|---|---|---|---|---|---|---|---|---|---|---|
| | | | | | | | unbeh. | nach Wäsche | nach Reini-gung | | |
| Vergleichs-beispiel 1 | LL/CL/AH-Salz//DDS/PTHF 1000 38 38 19     0,9  4,1 | 40,0 | 95,0 | 5,0 | 1,55 | 122 | 15 | 12 | 6 | hart | ja |
| 2 | LL/CL/AH-Salz//AS/PTHF 1000 15 36 9        5   35 | 25,0 | 60,0 | 40,0 | 1,60 | 130 | 12 | 6 | 2 | sehr weich | nein |
| 3 | LL/CL//DDS/PTHF 1000 17 13  13    57 | 56,7 | 30,0 | 70,0 | 1,50 | 105 | 9 | 6 | 3 | sehr weich | nein |
| 4 (JP-OS 76 19034) | CL // AS/DMT/DMIS/PTHF 1000/BD 28,2 0,7 16,1 9,1    29          16,9 | — | 28,2 | 71,8 | 1,65 | 159 | nicht bestimmbar | | | weich | ja |

Abkürzungen:

BD:      Butandiol-1,4.
CL:      Caprolactam.
DH-Salz: Salz aus Dodecandisäure und Hexamethylendiamin.
AUS:     $\omega$-Aminoundecansäure.
DDS:     Dodecandisäure.
LL:      Laurinlactam.
IPD:     Isophorondiamin.
HMD:     Hexamethylendiamin.
AzS:     Azelainsäure.
AS:      Adipinsäure.
PTHF:    Poly(tetrahydrofuran)diol.

**Patentanspruch**

Verwendung von Copolyetheresteramiden, welche erhalten worden sind aus

A) Lactam bzw. $\omega$-Aminocarbonsäuren und/oder äquivalenten Mengen von Dicarbonsäuren und Diaminen als polyamidbildende Verbindungen und

B) Dicarbonsäuren und Polyalkylenoxid-Diolen als polyetheresterbildende Verbindungen im Molverhältnis 1 : 0,95 bis 1 : 1,05 als Schmelzkleber zum Heißsiegeln von Textilien,

dadurch gekennzeichnet, daß die polyamidbildenden Verbindungen zu 30 bis 75 Gewichtsprozent aus Laurinlactam bestehen und die restlichen Verbindungen zusammen mit Laurinlactam Copolyamide ergeben, deren Schmelzpunkt im Bereich von 90 bis 150°C liegt, als Dicarbonsäuren aliphatische Dicarbonsäuren eingesetzt werden und die Komponenten A und B im Gewichtsverhältnis 93 : 7 bis 35 : 65 eingesetzt werden.

**Claim**

The use of a copolyetheresteramide which has been obtained from

(A) a lactam or $\omega$-aminocarboxylic acid and/or equivalent amounts of a dicarboxylic acid and a diamine as polyamide-forming compound(s) and

(B) a dicarboxylic acid and a polyoxyalkylene-diol in a molar ratio of from 1 : 0.95 to 1 : 0.5 as polyether-ester-forming compounds,.

as a hot-melt adhesive for the heat-sealing of textile material, characterised in that the polyamide-forming compounds consist to the extent of 30 to 75% by weight of laurolactam and for the residue of material which forms with laurolactam a copolyamide whose melting point is in the range from 90 to 150°C, that aliphatic dicarboxylic acids are used as any dicarboxylic acids, and that the components A and B are used in a weight ratio of from 93 : 7 to 35 : 65.

**Revendication**

L'utilisation, en tant qu'adhésifs fusibles pour le thermosoudage de textiles, de copolyéther-ester-amides qui on été obtenues à partir

A) de lactames ou d'acides oméga-aminocarboxyliques et/ou de quantités équivalentes d'acides dicarboxyliques et de diamines comme composés formateurs de polyamide

B) d'acides dicarboxyliques et de polyoxyalkylène-diols comme composés formateurs de polyéther-ester, dans un rapport molaire de 1 : 0,95 à 1 : 1,05,

caractérisée par le fait que les composés formateurs de polyamide sont constitués pour 30 à 75% en poids par du laurolactame et que les composés restants fournissent, conjointement avec le laurolactame, des copolyamides dont le point de fusion se situe dans un domaine de 90 à 150°C, qu'on utilise, comme acides dicarboxyliques, des acides dicarboxyliques aliphatiques et que les composants A et B sont utilisés dans un rapport pondéral de 93 : 7 à 35 : 65.